# FASCICULE DE BREVET EUROPEEN

(11) **EP 0 573 320 B1**
(45) Date de publication et mention de la délivrance du brevet: **09.07.1997**
(21) Numéro de dépôt: 93401180.0
(22) Date de dépôt: 07.05.1993
(51) Int. Cl.: G01S 13/76, G06K 7/10, G08G 1/017, B60R 25/10

(54) **Système pour l'identification et la détection automatique de véhicules ou d'objets**
System zur automatischen Identifizierung und Erkennung von Fahrzeugen und Gegenständen
System for automatic identification and detection of vehicles and objects

(30) Priorité: 26.05.1992 FR 9206432
(43) Date de publication de la demande: 08.12.1993
(73) Titulaire: THOMSON-CSF, 75008 Paris (FR)
(72) Inventeur: Paschal, Jean-Pierre, F-92402 Courbevoie Cedex (FR)
(74) Mandataire: Lincot, Georges

(56) Documents cités:
- EP-A- 0 245 555
- EP-A- 0 246 960
- FR-A- 2 656 449
- FR-A- 2 667 554
- GB-A- 2 186 409

## Description

La présente invention concerne un système pour l'identification et la détection automatique de véhicules ou d'objets.

Elle s'applique notamment à la détection et la localisation de véhicules volés.

Il est connu pour pallier la carence des alarmes sonores équipant les véhicules, de placer dissimulé sur ceux-ci des marqueurs électroniques pour identifier à l'aide d'une infrastructure de détection placée en des endroits déterminés d'un territoire les véhicules volés. Un dispositif de ce type est par exemple décrit dans la demande de brevet français 2 656 449 déposée au nom de la société de droit français VOLBACK.

Mais cette solution qui est très onéreuse, est également peu sure car elle nécessite la mise en place d'un nombre très important de capteurs électromagnétiques sur des circuits routiers bien localisés d'un territoire ce qui exige un guidage des véhicules au-dessus des capteurs et dissuade de ce fait les voleurs d'emprunter les routes sur lesquelles les capteurs sont installés. D'autre part, un voleur averti peut toujours détecter la présence d'un marqueur sur le véhicule qu'il vole pour le détruire ou le neutraliser en le recouvrant par exemple d'un écran métallique qui coupe tout rayonnement électromagnétique entre marqueur et capteur. De la sorte un véhicule volé peut toujours circuler sans que sa présence sur un itinéraire routier où des capteurs sont installés puisse être détectée.

Le but de l'invention est de pallier les inconvénients précités.

A cet effet, l'invention a pour objet un système pour l'identification et la détection automatique de véhicules ou d'objets caractérisé en ce qu'il comprend :
- dans chaque véhicule ou objet identifiable une étiquette électronique pourvue de moyens d'émission et de réception radioélectriques pour transmettre et mémoriser un code d'identification du véhicule ou de l'objet
- et à l'extérieur de chaque véhicule ou objet au moins un lecteur mobile déplaçable à volonté à proximité de véhicules ou d'objets identifiables comportant :
   - une mémoire d'enregistrement d'un fichier de codes d'identifications d'objets ou de véhicules à identifier
   - des moyens d'interrogation radioélectriques des étiquettes pour provoquer la transmission des codes d'identification des véhicules ou objets
   - des moyens de comparaison des codes d'identification contenus dans le fichier avec ceux transmis par les étiquettes
   - et des moyens de signalisation pour signaler de façon immédiate la présence de véhicules dont les codes d'identification correspondent à ceux mémorisés dans le fichier

L'invention a pour principal avantage qu'elle permet de mettre à la disposition des forces publiques, police et gendarmerie par exemple ou des assureurs des moyens efficaces d'identification des véhicules volés qui peuvent ainsi être alertées et prendre les dispositions qui s'imposent dès qu'un véhicule volé est détecté. Elle constitue également un moyen sûr de détection des véhicules volés du fait que par principe un véhicule en stationnement qui ne répondrait pas aux interrogations de lecture mobile pourra toujours être considéré comme suspect.

D'autres caractéristiques et avantages de l'invention apparaîtront ci-après à l'aide de la description qui va suivre faite en regard des dessins annexés qui représentent :
- la figure 1 un schéma illustrant le processus d'identification et de détection automatique de véhicules volés selon l'invention ;
- la figure 2 une vue en coupe d'une étiquette électronique mise en oeuvre dans le système selon l'invention ;
- la figure 3 une architecture générale d'un système d'identification et de détection de véhicules volés selon l'invention ;
- la figure 4 une vue en perspective d'un lecteur d'étiquette électronique selon l'invention ;
- la figure 5 une illustration du processus de réactualisation périodique par radio du fichier du lecteur selon l'invention.

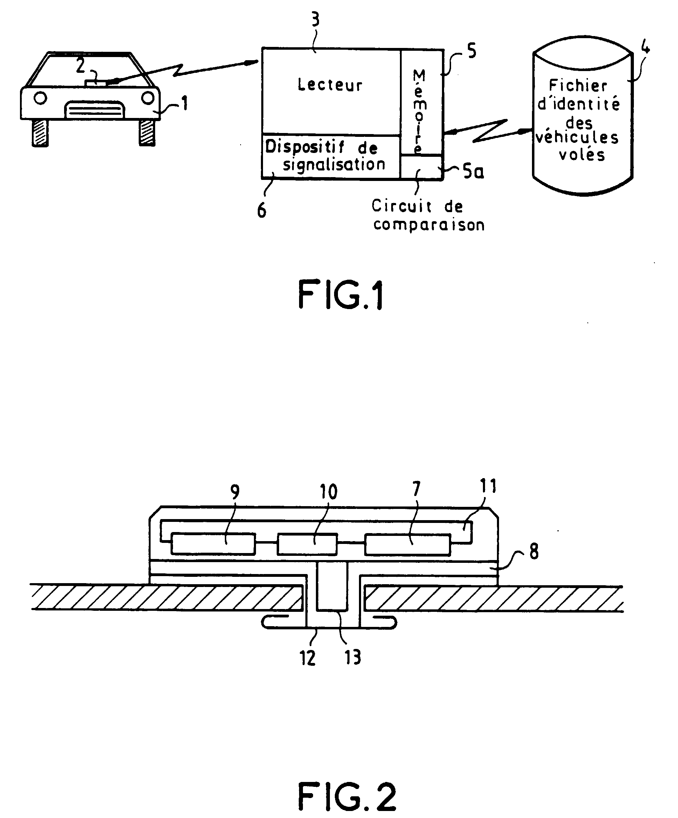

Selon l'invention, chaque véhicule portant la référence 1 sur la figure 1 comporte une étiquette électronique 2 agencée pour répondre à des signaux d'interrogations émis par un lecteur 3 sous la commande de personnes autorisées telles que celles constituant les personnels de la police, de la gendarmerie, des douanes ou des sociétés d'assurance intéressés par la détection des véhicules volés. La réponse de l'étiquette 2 a lieu sous la forme de signaux codés permettant par un décodage effectué dans le lecteur 3 l'identification du véhicule par son numéro d'immatriculation par exemple. L'interrogation de l'étiquette 2 par le lecteur 3 est commandée à volonté par chaque personne autorisée lorsque le lecteur est dans la portée radioélectrique du circuit d'émission de l'étiquette 2. Pour permettre l'identification d'un véhicule volé une copie d'un fichier 4 d'identification des véhicules volés est enregistrée dans une mémoire 5 du lecteur 3. Cette copie permet d'effectuer par un circuit de comparaison 5a une comparaison de l'identité d'un véhicule 1 interrogé aux identités des véhicules volés tenues dans la copie du fichier 4 qui est stockée dans la mémoire 5 de s'assurer que l'identité du véhicule interrogé fait ou non partie de la liste du fichier 4 des véhicules volés. Le lecteur 3 comporte également un dispositif de signalisation 6 qui permet de signaler l'identité d'un véhicule volé à la personne autorisée qui le détient. Celle-ci peut alors prendre toutes les dispositions utiles pour permettre la récupération du véhicule volé par son propriétaire et effectuer la mise à jour du fichier 4 d'identité des véhicules volés.

L'étiquette 2 peut être réalisée de la manière représentée à la figure 2. Suivant ce mode de réalisation l'étiquette comporte un circuit intégré 6 alimenté par une pile 7 fixée sur un substrat 8. Le circuit intégré 6 comporte de façon connue, une mémoire morte programmable 9 couplée à un dispositif d'émission-réception 10 relié à une antenne 11. Le substrat 8 comporte une embase de fixation 12 sous la forme d'un rivet par exemple, pour permettre la fixation de l'étiquette sur une tôle de véhicule. Un fil de détection 13 est noyé dans le substrat 8 et est relié dans l'embase 12 à l'électronique du circuit intégré 6 pour désactiver complètement l'étiquette lors d'une tentative d'extraction de l'étiquette 2.

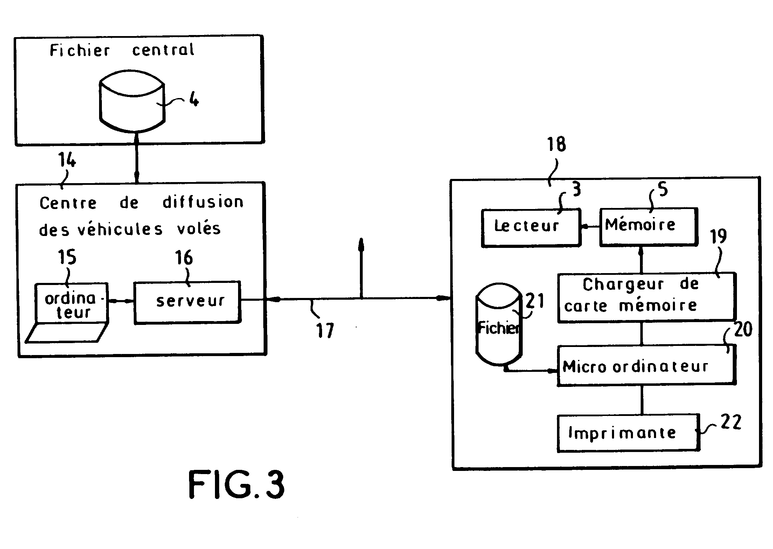

Pour déployer sur tout un territoire le système qui vient d'être décrit il est nécessaire de le compléter par des dispositions du type de celles qui sont représentées à la figure 3 où les éléments homologues à ceux de la figure 1 sont représentés avec les mêmes références. Dans ce cas en effet il est judicieux de prévoir que la mise à jour du fichier des véhicules volés soit effectuée à partir d'un centre de diffusion des identités des véhicules volés 14 composé par exemple d'un ordinateur 15 relié à un serveur 16 pour la diffusion sur un réseau de transmission d'informations 17 des identités des véhicules volés à destination de stations d'exploitation 18 dispersées sur le territoire. Ces stations d'exploitation 18 qui sont mises à la disposition par exemple de centres de police ou de gendarmerie ont pour but la mise à jour de la mémoire 5 des lecteurs 3. A cette fin, la mémoire 5 peut être avantageusement formée (et non exclusivement) par une carte mémoire amovible à puce comportant le circuit de comparaison des identités décrit précédemment et une mémoire morte programmable qui est chargée par un chargeur de cartes mémoires 19 relié à un micro-ordinateur 20. Cette disposition permet à la station d'exploitation 18 de recueillir les identités des véhicules volés transmises sur le réseau de transmission 17 dans un fichier 21 adressé par le micro-ordinateur 20. Une imprimante 22 reliée au micro-ordinateur 20 permet l'édition du fichier des identités des véhicules volés sur un support papier.

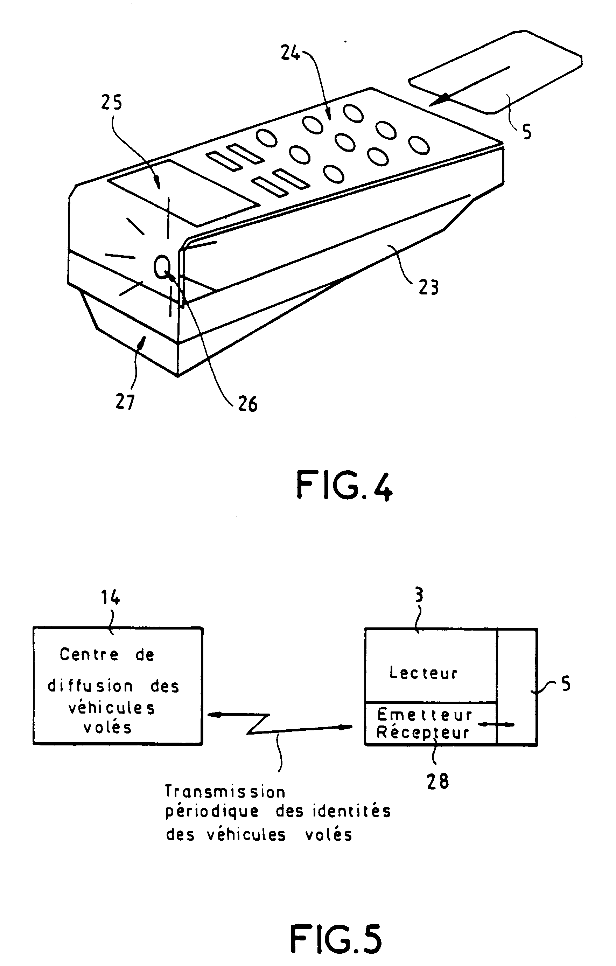

De la sorte chaque lecteur 3 peut posséder en mémoire un fichier d'identité des véhicules volés qui lui est propre. Ce fichier est chargé dans la carte mémoire amovible 5. La mise à jour de la mémoire 5 peut être réalisée de préférence quotidiennement à chaque départ par exemple d'une mission de surveillance, par la station d'exploitation 18 du poste 11. Le centre de diffusion 14 peut être réactualisé à tout moment, quotidiennement par exemple par les données d'identité des véhicules volés mémorisées dans le fichier d'identité 21 de la station d'exploitation. Le centre de diffusion 14 est connecté au fichier central 4 de façon à pouvoir filtrer et chiffrer les informations qu'il reçoit pour ne transmettre par exemple que les numéros d'identité des véhicules volés sur une période de temps déterminée. Les lecteurs 3 sont structurés de la façon représentée à la figure 4. Leur ergonomie est adaptée pour permettre leur utilisation par des patrouilles pédestres ou motorisées. A cette fin chaque lecteur 3 possède un boîtier 23 portant incrusté sur une de ses faces un clavier 24 pour permettre au porteur du lecteur 3 d'introduire par exemple un code d'accès personnel et des données de contrôle diverses. Il comporte également un écran de visualisation 25, un bruiteur 26, et des moyens d'accès non visibles sur la vue en perspective de la figure 4 pour l'introduction des cartes mémoire 5. Une poignée de maintien 27 est aménagée pour permettre le transport du lecteur par les patrouilles pédestres ou motorisées.

Une logique interne au lecteur 3, non représentée, permet par exemple d'effectuer systématiquement et automatiquement les demandes d'identification. Ceci permet aux seuls véhicules munis d'étiquettes à portée de communication avec un lecteur 3 de répondre par leur propre numéro d'identification qui peut ainsi être visualisé automatiquement sur leur écran 25. Le bruiteur 26 permet de signaler quasi-instantanément à la patrouille la présence d'un ou plusieurs véhicules volés. Celle-ci peut alors lire sur l'écran 25 l'identité du véhicule volé détecté et contacter son poste de rattachement par voie radio pour déclencher une intervention de récupération du véhicule, par exemple.

Suivant une première variante de réalisation de l'invention, le lecteur 3 peut aussi être intégré dans une borne de service disposée dans un centre de police ou d'assurance pour permettre par exemple à des acheteurs d'un véhicule d'occasion de s'assurer avant toute opération d'achat que le véhicule n'est pas déjà répertorié comme étant volé. Cette disposition a l'avantage en stationnant chaque véhicule à contrôler en face de la borne, de permettre, après lecture automatique de l'identité du véhicule et recherche dans le fichier des identités des véhicules volés, de renseigner automatiquement l'acheteur sur le caractère licite de son achat. Cette disposition vaut également pour les contrôles d'identification des véhicules entrant en fourrière et des épaves.

Suivant une deuxième variante de réalisation de l'invention, le système peut être adapté au contrôle d'identité des conducteurs pour vérifier qu'ils sont bien habilités à conduire leur véhicule. Pour se faire, il est prévu d'intégrer dans le lecteur 3 un dispositif de lecture de cartes à puce possédé par les conducteurs, cartes d'identité ou d'assurance, dans lesquelles sont mémorisés les identités des conducteurs et les données des véhicules. L'opération de contrôle consiste alors à comparer les deux identités du véhicule et de chaque carte à puce lues et d'en visualiser le résultat.

Enfin selon encore une autre variante de réalisation le système peut encore être adapté pour permettre une réactualisation périodique par voie radio du fichier 5 des lecteurs comme cela est représenté sur la figure 5 où les éléments homologues à ceux des figures 1 et 3 sont représentés avec les mêmes références. Suivant ce mode de réalisation les lecteurs sont reliés par voie radio au centre de diffusion 14 grâce à un émetteur-récepteur contenu à l'intérieur de leur boîtier 23. Cette dernière disposition donne la possibilité à tous les lecteurs 3 de recevoir régulièrement l'évolution des identités des vols en cours de journée et permet d'assurer ainsi un contrôle plus efficace.

## Revendications

1. Système pour l'identification et la détection automatique de véhicules (1) ou d'objets caractérisé en ce qu'il comprend :
- dans chaque véhicule (1) ou objet identifiable une étiquette électronique (2) pourvue de moyens d'émission et de réception radioélectriques pour transmettre et mémoriser un code d'identification du véhicule ou de l'objet
- et à l'extérieur de chaque véhicule (1) ou objet au moins un lecteur mobile (3) déplaçable à volonté à proximité de véhicules ou d'objets identifiables comportant :
- une mémoire d'enregistrement (5) d'un fichier de codes d'identifications d'objets ou de véhicules à identifier
- des moyens d'interrogation radioélectriques des étiquettes pour provoquer la transmission des codes d'identification des véhicules ou objets
- des moyens de comparaison (5a) des codes d'identification contenus dans le fichier avec ceux transmis par les étiquettes
- et des moyens de signalisation (6) pour signaler de façon immédiate la présence de véhicules dont les codes d'identification correspondent à ceux mémorisés dans le fichier .

2. Système selon la revendication 1 caractérisé en ce qu'il comprend un centre de diffusion (14) pour la mise à jour des codes d'identification contenus dans le fichier.

3. Système selon la revendication 2 caractérisé en ce que le centre de diffusion (14) est relié à des stations d'exploitation (18) par un réseau de transmission d'informations (17).

4. Système selon la revendication 2 caractérisé en ce que le centre de diffusion comporte un ordinateur (15) relié à un serveur (16).

5. Système selon la revendication 3 caractérisé en ce que chaque station d'exploitation (18) comporte des moyens de mise à jour de la mémoire d'enregistrement (5) de chaque lecteur (3).

6. Système selon la revendication 5 caractérisé en ce que la mémoire d'enregistrement est une carte mémoire amovible par l'utilisateur.

7. Système selon les revendications 1 et 6 caractérisé en ce que les moyens de comparaison sont contenus dans la carte mémoire amovible (5).

8. Système selon l'une quelconque des revendications 1 à 7 caractérisé en ce que les lecteurs sont intégrés dans des bornes de service disposées en des endroits déterminés d'un territoire.

9. Système selon l'une quelconque des revendications 1 à 8 caractérisé en ce que chaque lecteur (3) comporte un boîtier (22) portant incrusté sur une de ses faces un clavier (23), un écran de visualisation (24) un bruiteur (25) et des moyens d'accès pour l'introduction d'une carte mémoire (5).

10. Système selon la revendication 9 caractérisé en ce que chaque lecteur (3) comporte un émetteur-récepteur (28) pour la mise à jour périodique des identités de véhicules volés contenues dans la mémoire d'enregistrement (5)

11. Système selon l'une quelconque des revendications 1 à 10 caractérisé en ce que chaque étiquette comporte une mémoire morte programmable (9) couplé à un dispositif d'émission-réception (10) relié à une antenne (11).

12. Utilisation du système selon l'une quelconque des revendications 1 à 11 à la détection automatique de véhicules volés.

13. Utilisation du système selon l'une quelconque des revendications 1 à 11 à l'achat de véhicules d'occasion.

14. Utilisation du système selon l'une quelconque des revendications 1 à 11 au contrôle d'identité du conducteur.

## Patentansprüche

1. System zur automatischen Identifikation und Erfassung von Fahrzeugen (1) oder Gegenständen, dadurch gekennzeichnet, daß es aufweist:
- in jedem zu identifizierenden Fahrzeug (1) oder Gegenstand ein elektronisches Etikett (2) mit funkelektrischen Sende- und Empfangsmitteln, um einen Identifikationskode des Fahrzeugs oder des Gegenstands zu übertragen und zu speichern,
- und außerhalb jedes Fahrzeugs (1) oder Gegenstands mindestens ein bewegliches Leseorgan (3), das nach Belieben in die Nähe von Fahrzeugen oder identifizierbaren Gegenständen gebracht werden kann und aufweist:
- einen Registrierspeicher (5) für eine Kartei von Identifikationskodes von zu identifizierenden Gegenständen oder Fahrzeugen,
- Mittel zur funkelektrischen Abfrage der Etiketten, um die Übertragung der Identifikationskodes der Fahrzeuge oder Gegenstände zu bewirken,
- Mittel (5a) zum Vergleich der in der Kartei enthaltenen Identifikationskodes mit denen, die von den Etiketten übertragen werden,
- und Signalisationsmittel (6), um sofort das Vorhandensein von Fahrzeugen anzuzeigen, deren Identifikationskodes den in der Kartei gespeicherten Kodes entsprechen.

2. System nach Anspruch 1, dadurch gekennzeichnet, daß es e Zentralstelle (14) für die Aktualisierung der in der Kartei enthaltenen Identifikationskodes aufweist.

3. System nach Anspruch 2, dadurch gekennzeichnet, daß die Zentralstelle (14) mit Auswertestationen (18) über ein Informationsübertragungsnetz (17) verbunden ist.

4. System nach Anspruch 2, dadurch gekennzeichnet, daß die Zentralstelle einen mit einem Server (16) verbundenen Rechner (15) aufweist.

5. System nach Anspruch 3, dadurch gekennzeichnet, daß jede Auswertestation (18) Mittel zur Aktualisierung des Registrierspeichers (5) jedes Leseorgans (3) aufweist.

6. System nach Anspruch 5, dadurch gekennzeichnet, daß der Registrierspeicher eine durch den Benutzer einsteckbare Speicherkarte ist.

7. System nach den Ansprüchen 1 und 6, dadurch gekennzeichnet, daß die Vergleichsmittel auf der einsteckbaren Speicherkarte (5) enthalten sind.

8. System nach einem beliebigen der Ansprüche 1 bis 7, dadurch gekennzeichnet, daß die Leseorgane in Dienstsäulen integriert sind, die an bestimmten Stellen eines Gebiets angeordnet sind.

9. System nach einem beliebigen der Ansprüche 1 bis 8, dadurch gekennzeichnet, daß jedes Leseorgan (3) ein Gehäuse (22) aufweist, das auf einer seiner Seiten eine Tastatur (23), ein Anzeigefeld (24), eine Alarmquelle (25) und Zugangsmittel für die Einführung einer Speicherkarte (5) trägt.

10. System nach Anspruch 9, dadurch gekennzeichnet, daß jedes Leseorgan (3) einen Sender-Empfänger (28) für die periodische Aktualisierung der Identitäten von gestohlenen Fahrzeugen im Registrierspeicher (5) enthält.

11. System nach einem beliebigen der Ansprüche 1 bis 10, dadurch gekennzeichnet, daß jedes Etikett einen programmierbaren Festspeicher (9) enthält, der mit einer mit einer Antenne (11) verbundenen Sende-Empfangsvorrichtung (10) gekoppelt ist.

12. Verwendung des Systems nach einem beliebigen der Ansprüche 1 bis 11 zur automatischen Erfassung von gestohlenen Fahrzeugen.

13. Verwendung des Systems nach einem beliebigen der Ansprüche 1 bis 11 beim Kauf von Gebrauchtfahrzeugen.

14. Verwendung des Systems nach einem beliebigen der Ansprüche 1 bis 11 für die Identitätskontrolle des Fahrers.

## Claims

1. System for the identification and automatic detection of vehicles (1) or objects characterized in that it comprises:
- in each identifiable vehicle (1) or object, an electronic label (2) provided with radioelectrical transmission and reception means to transmit and memorize an identification code of the vehicle or object
- and, outside each vehicle (1) or object, at least one mobile reader (3) that can be moved about as desired in the vicinity of identifiable vehicles or objects comprising:
- a memory (5) for the recording of a file of identification codes of objects or vehicles to be identified;
- radioelectrical means for the interrogation of the labels to prompt the transmission of the identification codes of the vehicles or objects;
- means (5a) for the comparison of the identification codes contained in the file with those transmitted by the labels;
- and signalling means (6) to immediately signal the presence of vehicles whose identification codes correspond to those memorized in the file.

2. System according to Claim 1, characterized in that it comprises a broadcasting centre (14) for the updating of the identification codes contained in the file.

3. System according to Claim 2, characterized in that the broadcasting centre (14) is connected to user stations (18) by an information transmission network (17).

4. System according to Claim 2, characterized in that the broadcasting centre comprises a computer (15) connected to a server (16).

5. System according to Claim 3, characterized in that each user station (18) comprises means for the updating of the recording memory (5) of each reader (3).

6. System according to Claim 5, characterized in that the recording memory is a memory card removable by the user.

7. System according to any one of Claims 1 to 6, characterized in that the comparison means are contained in the removable memory card (5).

8. System according to any one of Claims 1 to 7, characterized in that the readers are integrated into service terminals positioned at determined places on a territory.

9. System according to any one of Claims 1 to 8, characterized in that each reader (3) comprises a case (22) having a keyboard (23) overlaid on one of its faces, a display screen (24), a beeper (25) and access means for the introduction of a memory card (5).

10. System according to Claim 9, characterized in that each reader (3) comprises a transceiver (28) for the periodic updating of the identities of stolen vehicles contained in the recording memory (5).

11. System according to any one of Claims 1 to 10, characterized in that each label comprises a programmable read-only memory (9) coupled to a transceiver device (10) connected to an antenna (11).

12. Use of the system according to any one of Claims 1 to 11 in the automatic detection of stolen vehicles.

13. Use of the system according to any one of Claims 1 to 11 in the purchase of second-hand vehicles.

14. Use of the system according to any one of Claims 1 to 11 in driver identity checks.
